# EUROPEAN PATENT APPLICATION

(11) **EP 3 683 040 A1**
(43) Date of publication of application: **22.07.2020**
(21) Application number: 20160726.4
(22) Date of filing: 21.07.2017
(51) Int. Cl.: B29C 64/371, B29C 64/393, B33Y 30/00, B33Y 50/02, B29C 64/153, B29C 64/268, G01P 5/00

(54) **OPTICAL DETERMINING DEVICE FOR AN APPARATUS FOR ADDITIVELY MANUFACTURING THREE-DIMENSIONAL OBJECTS**

(62) Divisional of application: 17182643.1
(71) Applicant: CL Schutzrechtsverwaltungs GmbH, 96215 Lichtenfels (DE)
(72) Inventor: Döhler, Tim, 96269 Großheirath (DE)
(74) Representative: Hafner & Kohl PartmbB

(57) **Abstract**

Apparatus (1) for additively manufacturing three-dimensional objects (2) by means of successive layerwise selective irradiation and consolidation of layers of a build material (3) which can be consolidated by means of an energy beam (4), the apparatus (1) comprising:
- a process chamber (8) comprising a build plane (7) in which layers of build material (3) are successively layerwise selectively irradiated and consolidated by means of an energy beam (4) during operation of the apparatus (1);
- a gas stream generating device (9) configured to generate a gas stream at least partly streaming through the process chamber (8) during operation of the apparatus (1), the gas stream being capable of being charged with non-consolidated build material particles (25), particularly smoke or smoke residues generated during operation of the apparatus (1), while streaming through the process chamber (8); and
- an optical determining device (12) configured to optically determine at least one parameter suitable for characterizing the streaming properties of the gas stream streaming through the process chamber (8) during operation of the apparatus (1) at at least one defined location within the process chamber (8).

## Description

The invention relates to an apparatus for additively manufacturing three-dimensional objects by means of successive layerwise selective irradiation and consolidation of layers of a build material which can be consolidated by means of an energy beam, the apparatus comprising: a process chamber comprising a build plane in which layers of build material are successively layerwise selectively irradiated and consolidated by means of an energy beam during operation of the apparatus, and a gas stream generating device configured to generate a gas stream at least partly streaming through the process chamber during operation of the apparatus, the gas stream being capable of being charged with non-consolidated build material particles, particularly smoke or smoke residues generated during operation of the apparatus, while streaming through the process chamber.

Respective apparatuses for additively manufacturing three-dimensional objects are known and may be embodied as selective laser sintering apparatuses, selective laser melting apparatuses or selective electron beam melting apparatuses, for instance.

It is also known that respective apparatuses comprise a gas stream generating device configured to generate a gas stream at least partly streaming through the process chamber during operation of the apparatus, the gas stream being charged with non-consolidated build material particles, particularly smoke or smoke residues generated during operation of the apparatus, while streaming through the process chamber.

The streaming properties of a respective gas stream have an influence on the quality of the additive build process and thus, the quality of the objects to be additively built. Hence, an exact determination of the streaming properties of a respective gas stream is of significant value for the quality of the additive build process and the quality of the objects to be additively built.

Hitherto, the streaming properties of a respective gas stream are typically determined in tubes, pipes, etc. through which the gas stream streams before entering the process chamber and/or after exiting the process chamber. A direct determination of the streaming properties of the gas stream in the process chamber, i.e. while the gas stream streams through the process chamber, allowing for an improved determination of the streaming properties is typically not conducted.

In view of the above, it is the object of the invention to provide an apparatus for additively manufacturing of three-dimensional objects allowing for an improved determination of the streaming properties of the gas stream while streaming through the process chamber.

This object is achieved by an apparatus for additively manufacturing three-dimensional objects according to independent Claim 1. The dependent claims relate to possible embodiments of the apparatus according to independent Claim 1.

The apparatus described herein is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus comprises a number of structural and/or functional units. Exemplary structural and/or functional units are a process chamber comprising a build plane in which layers of build material are successively layerwise selectively irradiated and consolidated by means of an energy beam during operation of the apparatus, an irradiating device which is configured to selectively irradiate a build material layer disposed in the process chamber with at least one energy beam, and a gas stream generating device, which may be built as or may comprise a sucking and/or blowing device, which is configured to generate a gas stream at least partly streaming through the process chamber. The gas stream is capable of being charged with non-consolidated build material particles, particularly smoke or smoke residues generated during operation of the apparatus, while streaming through the process chamber. The gas stream is typically inert, i.e. typically a stream of an inert gas, e.g. argon, nitrogen, carbon dioxide, etc.

The apparatus further comprises an optical determining device configured to optically determine at least one parameter suitable for characterizing the streaming behavior or the streaming properties, respectively of the gas stream streaming through the process chamber during operation of the apparatus, i.e. typically during a build job in which at least one three-dimensional object is additively built, at one or more definable or defined location(s) within the process chamber. Thus, the optical determining device is configured to optically determine at least one parameter suitable for characterizing the streaming properties of the gas stream streaming through the process chamber during operation of the apparatus not outside, but directly inside the process chamber. The optical determining device is therefore, configured to directly monitor the streaming properties of the gas stream directly inside the process chamber, i.e. while the gas stream streams through the process chamber, during operation of the apparatus. Hence, the optical determining device is capable of providing direct and extensive, in particular timely and spatially resolved, information about the streaming properties of the gas stream inside the process chamber.

As will be apparent from the following description of embodiments of the apparatus, the locations at which the at least one parameter suitable for characterizing the streaming properties of the gas stream are determined may be arbitrarily chosen, i.e. in particular arbitrarily spatially distributed, within the process chamber allowing for comprehensive information on the streaming properties at arbitrary locations within the process chamber.
Compared with known principles for determining the streaming properties of a respective gas stream which are typically based on determining the streaming properties in tubes, pipes, etc. through which the gas stream streams before entering the process chamber and/or after exiting the process chamber, the optical determining device allows for a direct determination of the streaming properties of the gas stream inside the process chamber, i.e. while the gas stream streams through the process chamber, resulting in an improved determination of the streaming properties of the gas stream.

As a result, an apparatus for additively manufacturing of three-dimensional objects allowing for an improved determination of the streaming properties of the gas stream while streaming through the process chamber is given.

A respective parameter suitable for characterizing the streaming properties of the gas stream may be the streaming velocity, the streaming profile, etc. Both the streaming velocity and the streaming profile allow for a comprehensive insight on the streaming properties of the gas stream while streaming through the process chamber. Of course, changes, distributions, gradients, etc. of the respective parameter, e.g. streaming velocity, streaming profile, etc., suitable for characterizing the streaming properties of the gas stream can be determined.

The optical determining device may comprise at least one optical measuring unit configured to optically measure at least one measurement value within the process chamber, the measurement value being related to the gas stream, and at least one analysis and/or evaluating unit ("evaluating unit") configured to analyze and/or evaluate measurement values measured by the optical measuring unit so as to determine the at least one parameter suitable for characterizing the streaming properties of the gas stream streaming through the process chamber during operation of the apparatus at at least one defined location within the process chamber. The optical measuring unit is configured to provide measurement values related to the gas stream which can be analyzed and/or evaluated so as to determine respective parameters suitable for characterizing the streaming properties of the gas stream, the evaluating unit is configured to analyze and/or evaluate respective measurement values related to the gas stream so as to determine respective parameters suitable for characterizing the streaming properties of the gas stream. Both the optical measuring unit and the evaluating unit may be embodied in soft- and/or hardware or may comprise diverse sub-units embodied in soft- and/or hardware, respectively.

The optical measuring unit may be configured to measure respective measurement values at different locations within the process chamber. The optical measuring unit may also be configured to measure a plurality of measurement values at different locations within the process chamber. In other words, the optical measuring unit may be configured to measure a first measurement value at a first location having first spatial coordinates within the process chamber and (simultaneously or subsequently) measure at least one further measurement value at at least one further location having further spatial coordinates within the process chamber. Hence, the location at which a measurement value is measured can be automatically or manually arbitrarily defined, chosen, changed, etc. Taking measurement values at different locations within the process chamber allows for creating a multi-dimensional information on the streaming properties of the gas stream while streaming through the process chamber. Number and coordinates of respective locations at which respective measurement values are measured can be arbitrarily defined, chosen, changed, etc.

The evaluating unit may be configured to evaluate the plurality of measurement values so as to determine the at least one parameter suitable for characterizing the streaming properties of the gas stream in at least one multi-dimensional representation of the streaming properties of the gas stream streaming through the process chamber during operation of the apparatus. The multi-dimensional representation may be a real-time representation. The multi-dimensional representation may refer to a two-dimensional (spatial) representation of the parameter in at least one sub-volume of the process chamber and thus, a two-dimensional (spatial) representation of the streaming properties of the gas stream streaming through at least one sub-volume of the process chamber during operation of the apparatus or a three-dimensional (spatial) representation of the streaming properties of the parameter in at least one sub-volume of the process chamber and thus, a three-dimensional (spatial) representation of the gas stream streaming through at least one sub-volume of the process chamber during operation of the apparatus. In either case, changes, gradients, etc. of any respective multi-dimensional representation can be determined so as to determine a timely and/or locally resolved representation of the streaming properties of the gas stream streaming through the process chamber during operation of the apparatus.

The optical determining device may be configured to optically determine the at least one parameter suitable for characterizing the streaming properties of the gas stream on basis of laser-doppler-anemometry and/or on basis of light-sectioning. Both the principles of laser-doppler-anemometry and light-sectioning allow for a highly resolved determination of the streaming properties of the gas stream.

The principle of laser-doppler-anemometry typically comprises detecting and analyzing/evaluating scattered light signals generated at tracer particles within a gas stream to be evaluated/analyzed (in context with the present apparatus, respective non-consolidated build material particles may serve as respective tracer particles), when the gas stream containing the tracer particles passes through a measurement region/volume. The measurement region/volume is typically an intersecting point of pre-definable coordinates at which measurement beams intersecting each other. By analyzing/evaluating measured intensity modulations in the scattered light signals and/or measured changes of intensity modulations in the scattered light signals, the velocity of the tracer particles and the gas stream, respectively and thus, the streaming properties of the gas stream may be determined. Laser-doppler-anemometry allows for a both timely and spatially highly resolved characterization of the streaming properties of the gas stream.

The principle of light-sectioning typically comprises detecting and analyzing/evaluating pulsed light sections of defined duration (per pulse) and with a defined time-shift exposed in a measurement region/volume. By analyzing/evaluating the detected light sections, the path of tracer particles within a gas stream to be evaluated/analyzed (in context with the present apparatus, respective non-consolidated build material particles may serve as respective tracer particle) may be determined by means of known correlation algorithms, methods, etc. Knowing the time-shift and the path of the tracer particles, the velocity of the tracer particles and the gas stream, respectively and thus, the streaming properties of the gas stream may be determined. Light sectioning also allows for a both timely and spatially highly resolved characterization of the streaming properties of the gas stream.

If the optical determining device is configured to optically determine the at least one parameter suitable for characterizing the streaming properties of the gas stream on basis of laser-doppler-anemometry, the or at least one optical measuring unit being configured to optically measure at least one measurement value within the process chamber, the measurement value being related to the gas stream, may comprise a measurement beam generating unit configured to generate a plurality of measurement beams, e.g. laser beams, intersecting each other at an intersecting point of pre-definable coordinates within the process chamber and an optical detecting unit configured to detect the intersecting point of the measurement beams within the process chamber.

The measurement beam generating unit may be configured to generate a first plurality of measurement beams intersecting each other at a first intersecting point of pre-definable coordinates within the process chamber and configured to generate a second plurality of measurement beams intersecting each other at a second intersecting point of pre-definable coordinates within the process chamber. Respective first and second pluralities of measurement beams may be generated in simultaneous or timely shifted manner. The optical detecting unit may be configured to detect the first and second intersecting points of the measurement beams within the process chamber.

An exemplary configuration of an optical measuring unit configured to perform laser-doppler-anemometry measurements may comprise a measurement beam generating unit, an optical assembly, and an optical detecting unit.

The measurement beam generating unit is configured to generate at least one measurement beam. The measurement beam generating unit may comprise a measurement beam generating source, e.g. a laser source, configured to generate at least one measurement beam, e.g. a laser beam.

The optical assembly is configured to generate a plurality of measurement beams intersecting each other at arbitrary intersecting points within the process chamber. The optical assembly may be configured to generate measurement beams which extend in a vertical direction, i.e. typically in a (substantially) parallel direction to the energy beam used for selectively irradiating and consolidating build material, through the process chamber. The optical assembly may comprise a measurement beam splitter configured to split a measurement beam generated by the measurement beam generating unit in a plurality of measurement beams, an optical modulator, e.g. Bragg-cells, configured to modulate the measurement beams generated by the measurement beam splitter, and at least one optical refractor (lens). The optical refractor may be movably supported in at least one translatory and/or rotatory degree of freedom of motion so as to arbitrarily change the intersecting point of the measurement beams within the process chamber by being moved in the respective degree of freedom of motion. The optical refractor may form part of or be disposed in front of a beam entrance window allowing for the split and modulated measurement beams to enter the process chamber. The beam entrance window may also be movably supported in at least one respective degree of freedom of motion. The beam entrance window may be arranged in a horizontally extending process chamber wall (top-wall).

The optical detecting unit is configured to detect an intersecting point of the measurement beams within the process chamber. The optical detecting unit may comprise at least one optical detector, e.g. a photo diode or photo multiplier. The optical detector may be movably supported in at least one translatory and/or rotatory degree of freedom of motion so as to arbitrarily change the detection region/volume in order to assure detection of the intersecting points of the measurement beams at different locations within the process chamber by being moved in the respective degree of freedom of motion. The optical detector may form part of or be disposed in front of a detection window allowing for detecting of intersecting points of the measurement beams at different locations within the process chamber. The detection window may also be movably supported in at least one respective degree of freedom of motion. The beam entrance window may be arranged in a vertically extending process chamber wall (side-wall).

Of course, an evaluating unit configured to evaluate the measurement values so as to determine the at least one parameter suitable for characterizing the streaming properties of the gas stream is assigned to the optical detecting unit.

If the optical determining device is configured to optically determine the at least one parameter suitable for characterizing the streaming properties of the gas stream streaming on basis of light-sectioning, the or at least one optical measuring unit configured to optically measure at least one measurement value within the process chamber, the measurement value being related to the gas stream, may comprise a measurement beam generating unit configured to generate at least one pulsed measurement beam, e.g. a pulsed laser beam, extending through the process chamber, particularly parallel to the build plane, and an optical detecting unit configured to detect scattered light generated by interactions between the measurement beam and the gas stream, in particular interactions between the measurement beam and non-consolidated build material particles within the gas stream, in at least one detection region/volume within the process chamber.

An exemplary configuration of an optical measuring unit configured to perform light-sectioning measurements may comprise a measurement beam generating unit and an optical detecting unit.

The measurement beam generating unit is configured to generate at least one pulsed measurement beam. The measurement beam generating unit may comprise a measurement beam generating source, e.g. a laser source, configured to generate at least one pulsed measurement beam, e.g. a pulsed laser beam. The measurement beam generating unit is typically configured to generate measurement beams which extend in a horizontal direction/plane through the process chamber, i.e. typically in a (substantially) perpendicular direction to the energy beam used for selectively irradiating and consolidating build material, through the process chamber. The measurement beam generating unit may be movably supported in at least one translatory and/or rotatory degree of freedom of motion so as to arbitrarily change the plane in which the pulsed measurement beams extend within the process chamber by being moved in the respective degree of freedom of motion. The measurement beam generating unit may form part of or be disposed in front of a beam entrance window allowing for the measurement beams to enter the process chamber. The beam entrance window may also be movably supported in at least one respective degree of freedom of motion. The beam entrance window may be arranged in a vertically extending process chamber wall (side-wall).

The optical detecting unit is configured to detect tracer particles - as mentioned above typically non-consolidated build material particles within the gas stream - in a detection plane, i.e. the plane in which the measurement beams extend, within the process chamber. The optical detecting unit may comprise at least one optical detector, e.g. a camera. The optical detector may be movably supported in at least one translatory and/or rotatory degree of freedom of motion so as to arbitrarily change the detection plane in order to assure detection of tracer particles in different detection planes within the process chamber by being moved in the respective degree of freedom of motion. The optical detector may form part of or be disposed in front of a detection window allowing for detecting of tracer particles at different detecting planes within the process chamber. The detection window may also be movably supported in at least one respective degree of freedom of motion. The detection window may be arranged in a horizontally extending process chamber wall (top-wall).

Of course, an evaluating unit configured to evaluate the measurement values so as to determine the at least one parameter suitable for characterizing the streaming properties of the gas stream is assigned to the optical detecting unit.

In either case, the stream generating unit may be configured to control the streaming properties, e.g. the streaming velocity, of the gas stream on basis of the at least one determined parameter suitable for characterizing the streaming properties of the gas stream. Hence, on basis of the information on the streaming properties of the gas stream within the process chamber, a control loop may be implemented so as to control the streaming properties of the gas stream, i.e. to assure/maintain a gas stream with desired streaming properties resulting in improved quality of the additive build process and thus, the quality of the objects to be additively built.

The apparatus may further comprise an output interface unit configured to output the at least one determined parameter suitable for characterizing the streaming properties of the gas stream or the streaming properties of the gas stream, respectively, particularly in at least one multi-dimensional representation of the streaming properties of the gas stream. The output interface unit may comprise a graphical interface, e.g. a display, allowing for outputting a graphical representation of the output and/or may comprise a communication interface allowing for communicating a the output via a communication link, e.g. a communication network, to at least one communication partner.

The invention further relates to an optical determining device for an apparatus for additively manufacturing three-dimensional objects by means of successive layerwise selective irradiation and consolidation of layers of a build material which can be consolidated by means of an energy beam. The optical determining device being configured to optically determine at least one parameter suitable for characterizing the streaming properties of a gas stream streaming through a process chamber of the apparatus during operation of the apparatus at at least one defined location within the process chamber. The optical determining device may be implemented in the apparatus as specified herein. Thus, all annotations concerning the apparatus apply to the optical determining device in analogous manner.

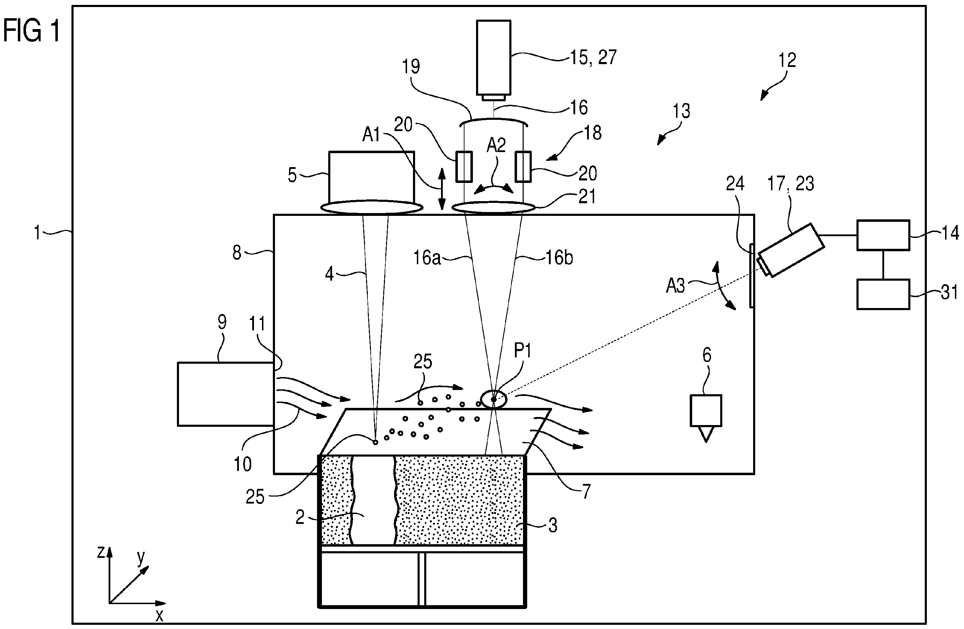

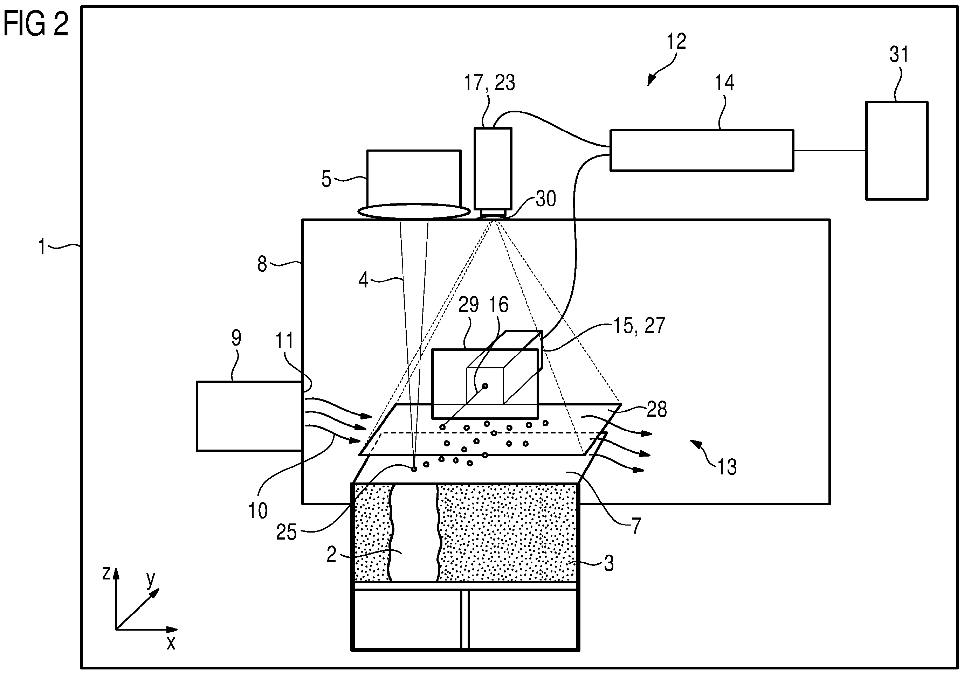

Exemplary embodiments of the invention are described with reference to the Fig., whereby
- Fig. 1, 2: each show a principle drawing of an apparatus for additively manufacturing three-dimensional objects according to an exemplary embodiment.

Fig. 1, 2 each show a principle drawing of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of an energy beam 4, e.g. a laser beam or an electron beam. The apparatus 1 can be a selective laser melting apparatus or a selective electron beam melting apparatus, for instance.

The apparatus 1 comprises a number of structural and/or functional units.

One exemplary functional unit is an irradiation device 5, particularly an energy beam generating device and/or an energy beam deflecting device, e.g. a scanning device, which serves for selectively irradiating build material layers with at least one energy beam 4.

Another exemplary functional unit is a build material application device 6, particularly a coating device, serving for applying a layer of build material 3, e.g. in a build plane 7 of a process chamber 8 of the apparatus 1.

Another exemplary functional unit is a stream generating device 9, e.g. a sucking and/or blowing device, which is configured to generate a gas stream (indicated by arrows 10) streaming through the process chamber 8, i.e. between an process chamber gas inlet 11 and a process chamber gas outlet (not shown). The gas stream is capable of being charged with non-consolidated build material particles 25, particularly smoke or smoke residues generated during operation of the apparatus 1, while streaming through the process chamber 8. The gaseous fluid stream is inert, i.e. a stream of an inert gas, e.g. argon, nitrogen, carbon dioxide, etc.

The apparatus 1 further comprises an optical determining device 12 configured to optically determine at least one parameter suitable for characterizing the streaming behavior or the streaming properties, respectively of the gas stream streaming through the process chamber 8 during operation of the apparatus 1 at one or more definable or defined location(s) within the process chamber 8. The optical determining device 12 is configured to optically determine respective parameters suitable for characterizing the streaming properties of the gas stream directly inside the process chamber 8. The optical determining device 12 is therefore, configured to directly monitor the streaming properties of the gas stream directly inside the process chamber 8. Hence, the optical determining device is capable of providing direct and extensive information about the streaming properties of the gas stream inside the process chamber 8.

A respective parameter suitable for characterizing the streaming properties of the gas stream may be the streaming velocity, the streaming profile, etc. Of course, changes, distributions, gradients, etc. of the respective parameter, e.g. streaming velocity, streaming profile, etc., suitable for characterizing the streaming properties of the gas stream can be determined.

The optical determining device 12 comprises an optical measuring unit 13 configured to optically measure at least one measurement value within the process chamber 8, the measurement value being related to the gas stream, and an analysis and/or evaluating unit 14 ("evaluating unit") configured to analyze and/or evaluate measurement values measured by the optical measuring unit 13 so as to determine the respective parameter suitable for characterizing the streaming properties of the gas stream. In other words, the optical measuring unit 13 is configured to provide measurement values related to the gas stream which can be analyzed and/or evaluated so as to determine respective parameters suitable for characterizing the streaming properties of the gas stream, the evaluating unit 14 is configured to analyze and/or evaluate respective measurement values related to the gas stream so as to determine respective parameters suitable for characterizing the streaming properties of the gas stream.

The optical measuring unit 13 is configured to measure respective measurement values at different locations within the process chamber 8. The optical measuring unit 13 is also configured to measure a plurality of measurement values at different locations within the process chamber 8. In other words, the optical measuring unit 13 is configured to measure a first measurement value at a first location having first spatial coordinates within the process chamber 8 and (simultaneously or subsequently) measure at least one further measurement value at at least one further location having further spatial coordinates within the process chamber 8. Hence, the location at which a measurement value is measured can be automatically or manually arbitrarily defined, chosen, changed, etc.

The evaluating unit 14 is configured to evaluate the plurality of measurement values so as to determine the respective parameter suitable for characterizing the streaming properties of the gas stream in at least one multi-dimensional representation of the streaming properties of the gas stream streaming through the process chamber 8. The multi-dimensional representation may be a real-time representation.

According to the exemplary embodiment of Fig. 1, the optical determining device 12 is configured to optically determine the parameter suitable for characterizing the streaming properties of the gas stream on basis of laser-doppler-anemometry.

According to this embodiment, the optical measuring unit 13 comprises a measurement beam generating unit 15 configured to generate a plurality of measurement beams 16, 16a, 16b intersecting each other at an intersecting point P1 of pre-definable coordinates within the process chamber 8 and an optical detecting unit 17 configured to detect the intersecting point P1 of the measurement beams 16, 16a, 16b within the process chamber 8.

The measurement beam generating unit 15 may be configured to generate a first plurality of measurement beams 16, 16a, 16b intersecting each other at a first intersecting point P1 of pre-definable coordinates within the process chamber 8 and configured to generate a second plurality of measurement beams intersecting each other at a second intersecting point of pre-definable coordinates within the process chamber 8. Respective first and second pluralities of measurement beams may be generated in simultaneous or timely shifted manner. The optical detecting unit 17 may be configured to detect the first and second intersecting points of the measurement beams within the process chamber 8.

Fig. 1 shows an exemplary configuration of the optical measuring unit 13. According to this exemplary configuration, the optical measuring unit 13 comprises the measurement beam generating unit 15, an optical assembly 18, and the optical detecting unit 17.

The measurement beam generating unit 15 is configured to generate a measurement beam 16 and comprises a measurement beam generating source 27, e.g. a laser source, configured to generate the measurement beam 16, e.g. a laser beam.

The optical assembly 18 is configured to generate a plurality of measurement beams 16a, 16b extend in a vertical direction, i.e. typically in a (substantially) parallel direction to the energy beam 4 used for selectively irradiating and consolidating build material, through the process chamber 8 and intersecting each other at intersecting points P1 within the process chamber 8 and comprises a measurement beam splitter 19 configured to split the measurement beam 16 generated by the measurement beam generating unit 15 in two measurement beams 16a, 16b, an optical modulator 20, e.g. Bragg-cells, configured to modulate the two measurement beams 16a, 16b generated by the measurement beam splitter 19, and an optical refractor 21 (lens).

The optical refractor 21 is movably supported in at least one translatory degree of freedom of motion (indicated by arrow A1) and a rotatory degree of freedom of motion (indicated by arrow A2) so as to arbitrarily change the intersecting point P1 of the measurement beams 16a, 16b within the process chamber 8 by being moved in the respective degree of freedom of motion. The optical refractor 21 forms part of or is disposed in front of a beam entrance window 22 arranged in a horizontally extending process chamber wall (top-wall) allowing for the measurement beams 16a, 16b to enter the process chamber 8. The beam entrance window 22 may also be movably supported in at least one respective degree of freedom of motion.

The optical detecting unit 17 comprises at least one optical detector 23, e.g. a photo diode or photo multiplier. The optical detector 23 is movably supported in at least one translatory degree of freedom of motion and/or rotatory degree of freedom of motion (indicated by arrow A3) so as to arbitrarily change the detection region/volume in order to assure detection of the intersecting points P1 of the measurement beams 16a, 16b at different locations within the process chamber 8 by being moved in the respective degree of freedom of motion. The optical detector 23 forms part of or is disposed in front of a detection window 24 arranged in a vertically extending process chamber wall (side-wall) allowing for detecting of intersecting points P1 of the measurement beams 16a, 16b at different locations within the process chamber 8. The detection window 24 may also be movably supported in at least one respective degree of freedom of motion.

The evaluating unit 14 is assigned to the optical detecting unit 17 by a communication link and hence, communicates with the optical detecting unit 17 to evaluate the measurement values so as to determine the parameter suitable for characterizing the streaming properties of the gas stream.

According to the exemplary embodiment of Fig. 2, the optical determining device 12 is configured to optically determine the parameter suitable for characterizing the streaming properties of the gas stream on basis of light-sectioning.

According to this embodiment, the optical measuring unit 13 comprises a measurement beam generating unit 15 configured to generate a pulsed measurement beam 16 extending through the process chamber 8 parallel to the build plane 7 and an optical detecting unit 17 configured to detect scattered light generated by interactions between the measurement beam 16 and the gas stream, in particular interactions between the measurement beam 16 and non-consolidated build material particles 25 within the gas stream, in a detection region/volume within the process chamber 8.

Fig. 2 shows an exemplary configuration of the optical measuring unit 13. According to this exemplary configuration, the optical measuring unit 13 comprises the measurement beam generating unit 15 and the optical detecting unit 17.

The measurement beam generating 15 unit is configured to generate a pulsed measurement beam 16 and comprises a measurement beam generating source 27, e.g. a laser source, configured to generate the pulsed measurement beam 16, e.g. a pulsed laser beam, extending in a horizontal direction/plane through the process chamber 8, i.e. in a (substantially) perpendicular direction to the energy beam 4 used for selectively irradiating and consolidating build material 3, through the process chamber 8. The measurement beam generating unit 15 may be movably supported in at least one translatory and/or rotatory degree of freedom of motion so as to arbitrarily change the plane 28 in which the pulsed measurement beam 16 extends within the process chamber 8 by being moved in the respective degree of freedom of motion. The measurement beam generating unit 15 forms part of or is disposed in front of a beam entrance window 29 arranged in a vertically extending process chamber wall (side-wall) allowing for the measurement beam 16 to enter the process chamber 8. The beam entrance window 29 may also be movably supported in at least one respective degree of freedom of motion.

The optical detecting unit 17 is configured to detect tracer particles, i.e. non-consolidated build material particles 25 within the gas stream, in detection plane 28, i.e. the plane in which the measurement beam 16 extends, within the process chamber 8. The optical detecting unit 17 comprises an optical detector 23, e.g. a camera. The optical detector 17 may be movably supported in at least one translatory and/or rotatory degree of freedom of motion so as to arbitrarily change the detection plane 28 in order to assure detection of tracer particles in different detection planes 28 within the process chamber 8 by being moved in the respective degree of freedom of motion. The optical detector 23 forms part of or is disposed in front of a detection window 30 arranged in a horizontally extending process chamber wall (top-wall) allowing for detecting of tracer particles at different detecting planes within the process chamber 8. The detection window 30 may also be movably supported in at least one respective degree of freedom of motion.

The evaluating unit 14 is assigned to the optical detecting unit 17 by a communication link and hence, communicates with the optical detecting unit 17 to evaluate the measurement values so as to determine the parameter suitable for characterizing the streaming properties of the gas stream.

In both embodiments, the stream generating unit 9 may be configured to control the streaming properties of the gas stream, e.g. the streaming velocity, on basis of the determined parameter suitable for characterizing the streaming properties of the gas stream. Hence, on basis of the information on the streaming properties of the gas stream within the process chamber 8, a control loop may be implemented so as to control the streaming properties of the gas stream, i.e. to assure/maintain a gas stream with desired streaming properties.

Also in both embodiments, the apparatus 1 may further comprise an output interface unit 31 configured to output the at least one determined parameter suitable for characterizing the streaming properties of the gas stream or the streaming properties of the gas stream, respectively, particularly in at least one multi-dimensional representation of the streaming properties of the gas stream. The output interface unit 31 may comprise a graphical interface, e.g. a display, allowing for outputting a graphical representation of the output and/or may comprise a communication interface allowing for communicating a the output via a communication link, e.g. a communication network, to at least one communication partner.

Various aspects and embodiments of the invention are defined by the following clauses:
1. Apparatus (1) for additively manufacturing three-dimensional objects (2) by means of successive layerwise selective irradiation and consolidation of layers of a build material (3) which can be consolidated by means of an energy beam (4), the apparatus (1) comprising:
   - a process chamber (8) comprising a build plane (7) in which layers of build material (3) are successively layerwise selectively irradiated and consolidated by means of an energy beam (4) during operation of the apparatus (1);
   - a gas stream generating device (9) configured to generate a gas stream at least partly streaming through the process chamber (8) during operation of the apparatus (1), the gas stream being capable of being charged with non-consolidated build material particles (25), particularly smoke or smoke residues generated during operation of the apparatus (1), while streaming through the process chamber (8); and
   - an optical determining device (12) configured to optically determine at least one parameter suitable for characterizing the streaming properties of the gas stream streaming through the process chamber (8) during operation of the apparatus (1) at at least one defined location within the process chamber (8).
2. Apparatus according to Clause 1, wherein the optical determining device comprises
   at least one optical measuring unit (13) configured to optically measure at least one measurement value within the process chamber (8), the measurement value being related to the gas stream, and
   at least one evaluating unit (14) configured to evaluate measurement values measured by the optical measuring unit (13) so as to determine the at least one parameter suitable for characterizing the streaming properties of the gas stream.
3. Apparatus according to Clause 2, wherein the at least one optical measuring unit (13) is configured to measure measurement values at different locations within the process chamber (8).
4. Apparatus according to Clause 3, wherein the optical measuring unit (13) is configured to measure a plurality of measurement values at different locations within the process chamber.
5. Apparatus according to Clause 4, wherein the evaluating unit (14) is configured to evaluate the plurality of measurement values so as to determine the at least one parameter suitable for characterizing the streaming properties of the gas stream in at least one multi-dimensional representation.
6. Apparatus according to any of the preceding Clauses, wherein the optical determining device (12) is configured to optically determine at least one parameter suitable for characterizing the streaming properties of the gas stream on basis of laser-doppler-anemometry and/or on basis of light-sectioning.
7. Apparatus according to Clause 6, wherein the optical determining device (12) is configured to optically determine at least one parameter suitable for characterizing the streaming properties of the gas stream on basis of laser-doppler-anemometry, whereby
   the or at least one optical measuring unit (13) being configured to optically measure at least one measurement value within the process chamber (8), the measurement value being related to the gas stream, comprises a measurement beam generating unit (15) configured to generate a plurality of measurement beams (16a, 16b) intersecting each other at an intersecting point (P1) of pre-definable coordinates within the process chamber (8) and an optical detecting unit (17) configured to detect the intersecting point (P1) of the measurement beams (16a, 16b) within the process chamber (8).
8. Apparatus according to Clause 7, wherein the measurement beam generating unit (15) is configured to generate a first plurality of measurement beams (16a, 16b) intersecting each other at a first intersecting point (P1) of pre-definable coordinates within the process chamber (8) and configured to generate a second plurality of measurement beams intersecting each other at a second intersecting point of pre-definable coordinates within the process chamber (8), and the optical detecting unit (17) is configured to detect the first and second intersecting points of the measurement beams within the process chamber (8).
9. Apparatus according to any of Clauses 6 - 8, wherein the optical determining device (12) is configured to optically determine at least one parameter suitable for characterizing the streaming properties of the gas stream on basis of light-sectioning, whereby
   the or at least one optical measuring unit (13) configured to optically measure at least one measurement value within the process chamber (8), the measurement value being related to the gas stream, comprises a measurement beam generating unit (15) configured to generate a pulsed measurement beam (16) extending through the process chamber (8), particularly parallel to the build plane (7), and an optical detecting unit (17) configured to detect scattered light generated by interactions between the measurement beam (16) and the gas stream, in particular non-consolidated build material particles (25) within the gas stream, in at least one detection region within the process chamber (8).
10. Apparatus according to any of the preceding Clauses, wherein the least at least one parameter suitable for characterizing the streaming properties of the gas stream streaming through the process chamber (8) during operation of the apparatus (19 is the streaming velocity of the gas stream.
11. Apparatus according to any of the preceding Clauses, wherein the stream generating unit (9) is configured to control the streaming properties of the gas stream on basis of the at least one determined parameter suitable for characterizing the streaming properties of the gas stream.
12. Apparatus according to any of the preceding Clauses, comprising an output interface unit (31) configured to output the at least one determined parameter suitable for characterizing the streaming properties of the gas stream, particularly at least one multi-dimensional representation of the streaming properties of the gas stream.
13. Optical determining device (12) for an apparatus (1) for additively manufacturing three-dimensional objects (2) by means of successive layerwise selective irradiation and consolidation of layers of a build material (3) which can be consolidated by means of an energy beam (4), the optical determining device (12) being configured to optically determine at least one parameter suitable for characterizing the streaming properties of a gas stream streaming through a process chamber (8) of the apparatus (1) during operation of the apparatus (1) at at least one defined location within the process chamber (8).

## Claims

1. An optical determining device (12) for an apparatus (1) for additively manufacturing three-dimensional objects (2) by means of successive layerwise selective irradiation and consolidation of layers of a build material (3) which can be consolidated by means of an energy beam (4), wherein the optical determining device (12) is configured to optically determine at least one parameter suitable for characterizing the streaming properties of a gas stream streaming through a process chamber (8) of the apparatus (1) during operation of the apparatus (1) at at least one defined location within the process chamber (8), wherein the optical determining device comprises:
at least one optical measuring unit (13) configured to optically measure at least one measurement value within the process chamber (8), the measurement value being related to the gas stream; and
at least one evaluating unit (14) configured to evaluate measurement values measured by the optical measuring unit (13) so as to determine the at least one parameter suitable for characterizing the streaming properties of the gas stream, wherein the at least one optical measuring unit (13) comprises a measurement beam generating unit (15) configured to generate one or more measurement beams (16, 16a, 16b) at a plurality of different locations having pre-defined coordinates within the process chamber (8).

2. The optical determining device (12) according to claim 1, wherein the at least one optical measuring unit (13) further comprises an optical detecting unit (17) configured to detect the one or more measurement beams (16, 16a, 16b) within the process chamber (8) and/or to detect scattered light generated by interactions between the one or more measurement beams (16, 16a, 16b) and the gas stream.

3. The optical determining device (12) according to one of the preceding claims, wherein the evaluating unit (14) is further configured to evaluate the plurality of measurement values so as to determine the at least one parameter suitable for characterizing the streaming properties of the gas stream in at least one multi-dimensional representation.

4. The optical determining device (12) according to claim 3, wherein the at least one multi-dimensional representation is a real-time representation.

5. The optical determining device (12) according to claim 3 or 4, wherein the at least one multi-dimensional representation is a three-dimensional spatial representation of the gas stream streaming through at least one sub-volume of the process chamber (8).

6. The optical determining device (12) according to one of the preceding claims, further configured to optically determine at least one parameter suitable for characterizing the streaming properties of the gas stream on the basis of laser-doppler-anemometry.

7. The optical determining device (12) according to one of the preceding claims, further configured to optically determine at least one parameter suitable for characterizing the streaming properties of the gas stream on the basis of light-sectioning.

8. The optical determining device (12) according to one of the preceding claims, wherein the measurement beam generating unit (15) is further configured to generate a plurality of measurement beams (16a, 16b) intersecting each other at respective ones of a plurality of intersecting points (P1) of different locations having respective pre-defined coordinates within the process chamber (8).

9. The optical determining device (12) according to one of the preceding claims, wherein the measurement beam generating unit (15) is further configured to generate:
a first plurality of measurement beams (16a, 16b) intersecting each other at a first intersecting point (P1) having pre-defined coordinates within the process chamber (8); and
a second plurality of measurement beams intersecting each other at a second intersecting point having pre-defined coordinates within the process chamber (8).

10. The optical determining device (12) according to one of claims 2 to 9, wherein the measurement beam generating unit (15) is configured to generate a pulsed measurement beam (16) extending through the process chamber (8) and wherein the optical detecting unit (17) is configured to detect scattered light generated by interactions between the measurement beam (16) and the gas stream, or between the measurement beam (16) and non-consolidated build material particles (25) within the gas stream.

11. The optical determining device (12) according to one of the preceding claims, wherein the at least one parameter suitable for characterizing the streaming properties of the gas stream streaming through the process chamber (8) during operation of the apparatus is the streaming velocity of the gas stream.

12. An optical determining device (12) according to one of the preceding claims, wherein the apparatus (1) comprises a stream generating unit configured to control the streaming properties of the gas stream on basis of the at least one determined parameter suitable for characterizing the streaming properties of the gas stream.

13. The optical determining device (12) according to one of the preceding claims, wherein the apparatus (1) comprises an output interface unit (31) configured to output the at least one determined parameter suitable for characterizing the streaming properties of the gas stream.

14. The optical determining device (12) according to claim 13, wherein the output interface (31) is further configured to output at least one multi-dimensional representation of the streaming properties of the gas stream.

15. The optical determining device (12) according to one of the preceding claims, wherein the gas stream comprises smoke or smoke residues generated during operation of the apparatus (1).
